# EUROPEAN PATENT SPECIFICATION

(11) **EP 2 432 146 B1**
(45) Date of publication and mention of the grant of the patent: **15.01.2014**
(21) Application number: 10842870.7
(22) Date of filing: 10.08.2010
(51) Int. Cl.: H04J 3/06, H04B 7/00

(54) **METHOD, SYSTEM AND DEVICE FOR TRANSMITTING SYNCHRONOUS DIGITAL HIERARCHY SIGNALS BY MICROWAVE**
VERFAHREN, SYSTEM UND VORRICHTUNG ZUM SENDEN SYNCHRONER DIGITALER HIERARCHIESIGNALE ÜBER MIKROWELLEN
PROCÉDÉ, SYSTÈME ET DISPOSITIF POUR TRANSMETTRE DES SIGNAUX DE HIÉRARCHIE NUMÉRIQUE SYNCHRONE PAR MICRO-ONDES

(43) Date of publication of application: 21.03.2012
(73) Proprietor: Huawei Technologies Co., Ltd., Guangdong 518129 (CN)
(72) Inventor: LUO, Xin, Shenzhen Guangdong 518129 (CN); ZHANG, Yihua, Shenzhen Guangdong 518129 (CN); TU, Yongjun, Shenzhen Guangdong 518129 (CN); HU, Zhengchao, Shenzhen Guangdong 518129 (CN); QI, Kai, Shenzhen Guangdong 518129 (CN)
(74) Representative: Isarpatent
(86) International application number: PCT/CN2010/075855
(87) International publication number: WO 2011/085587

(56) References cited:
- CN-A- 1 968 065
- JP-A- 2006 060 467
- US-B1- 6 389 036

## Description

### FIELD OF THE INVENTION

The present invention relates to the field of communications, and in particular, to a method, a system and a device for transmitting Synchronous Digital Hierarchy (SDH) signals through microwave.

### BACKGROUND OF THE INVENTION

Microwave communication is a communication means using microwave as a carrier to transfer information, and has a broad vista of applications due to good disaster resistance and relatively low requirements for factors such as the geographic environment for constructing base stations.

For an application scenario for transmitting SDH signals through microwave, in a first prior art, a microwave source device demaps Virtual Container (VC)-4, and maps the obtained 2048 kbit/s data stream E1 into a microwave frame, which is delivered to a microwave destination device through an air interface, so that the microwave destination device demaps the microwave frame to obtain the E1, and then implements reassembly of the VC-4 through mapping. In a second prior art, the microwave source device demaps a Tributary Unit (TU)-12 from the VC-4, and encapsulates the TU-12 into a microwave frame and delivers the microwave frame to the microwave destination device.

In the implementation of the present invention, the inventor finds that the prior art at least has the following problems.

In the first prior art, only the E1 is mapped into the microwave frame for transmission, time clock information is not attached, and as the E1 is dynamically adjusted in the VC-4 and adapted to the microwave frame in an asynchronous mapping manner, the E1 reassembled by the microwave destination device has a larger phase deviation in comparison with the E1 sent by the microwave source device, that is, E1 reassembled by the microwave destination device has larger wander. In the second prior art, the TU-12 is transmitted, the TU-12 demapped by the microwave destination device from the microwave frame may maintain consistency with the microwave source device, so that time clock performance of the TU-12 is not damaged in the delivery process; however, because the TU-12 contains management information such as a pointer and overhead, a large quantity of precious bandwidth is occupied after the TU-12 is encapsulated into the microwave frame, so the utilization rate of the bandwidth is reduced.

Document US 6,389,036 B1 discloses a SONET microwave system with compression of overhead bytes.

### SUMMARY OF THE INVENTION

To ensure a high utilization rate of microwave bandwidth and satisfy wander performance requirements for service information, the present invention is directed to a method, a system and a device for transmitting SDH signals through microwave. Technical solutions are provided in the following.

In a first aspect, a method for transmitting SDH signals through microwave is provided, which includes:
demapping, by a microwave source device, SDH signals received in a microwave frame period to obtain service information, values of positive adjustment states, and values of negative adjustment states, wherein the service information is asynchronously mapped to the SDH signals by bit by using the values of positive adjustment states and the values of negative adjustment states;
accumulating all the values of positive adjustment states and the values of negative adjustment states obtained through the demapping in the microwave frame period to obtain adjustment frequency information; and
transmitting the service information obtained through the demapping and the generated adjustment frequency information to a microwave destination device, so that the microwave destination device reassembles the service information according to the adjustment frequency information.

In a second aspect, a microwave device is further provided, which includes:
a demapping module, configured to demap SDH signals received in a microwave frame period to obtain service information, values of positive adjustment states, and values of negative adjustment states, where the service information is asynchronously mapped to the SDH signals by bit by using the values of positive adjustment states and the values of negative adjustment states;
a generating module, configured to accumulate all the values of positive adjustment states and the values of negative adjustment states obtained through the demapping performed by the demapping module in a microwave frameperiod to obtain adjustment frequency information; and
a transmitting module, configured to transmit the service information obtained through the demapping performed by the demapping module and the adjustment frequency information generated by the generating module to a microwave destination device, so that the microwave destination device reassembles the service information according to the adjustment frequency information.

In a third aspect, a system for transmitting a data stream through microwave is further provided, which includes a microwave source device according to the second aspect and a microwave destination device, wherein the microwave destination device comprising:
a receiving module, configured to receive service information and adjustment frequency information that are sent by a microwave source device; and
a reassembling module, configured to reassemble, according to the adjustment frequency information received by the receiving module, the service information received by the receiving module.

The technical solutions of the present invention have the following beneficial effects. The microwave source device demaps the SDH signals, and after generating the adjustment frequency information according to the values of positive adjustment states and the values of negative adjustment states obtained through the demapping, only transmits the service information obtained through the demapping and the generated adjustment frequency information to the microwave destination device, so that the microwave destination device reassembles the service information according to the adjustment frequency information. In this way, not only a high utilization rate of microwave bandwidth can be ensured, but also the service information reassembled by the microwave destination device can be enabled to satisfy wander performance requirements, so that long-chain networking transmission can be implemented, thereby achieving long-distance transmission of the SDH signals in the microwave.

### BRIEF DESCRIPTION OF THE DRAWINGS

To illustrate the technical solutions according to the embodiments of the present invention more clearly, the accompanying drawings for describing the embodiments are described briefly in the following. Apparently, the accompanying drawings in the following description are only some embodiments of the present invention; persons of ordinary skill in the art can derive other drawings according to the accompanying drawings without creative efforts.
FIG. 1 is a flow chart of a method for transmitting SDH signals through microwave according to Embodiment 1 of the present invention;
FIG. 2 is a flow chart of a method for transmitting SDH signals through microwave according to Embodiment 2 of the present invention;
FIG. 3 is a schematic structural diagram of SDH multiplexing and mapping according to Embodiment 2 of the present invention;
FIG. 4 is a schematic diagram of service information demapping according to Embodiment 2 of the present invention;
FIG. 5 is a schematic diagram illustrating the principle of transmitting SDH signals through microwave according to Embodiment 2 of the present invention;
FIG. 6 is a schematic structural diagram of a system for transmitting SDH signals through microwave according to Embodiment 3 of the present invention;
FIG. 7 is a schematic structural diagram of a microwave device according to Embodiment 4 of the present invention;
FIG. 8 is a schematic structural diagram of a microwave device according to Embodiment 5 of the present invention;
FIG. 9 is a schematic structural diagram of another microwave device according to Embodiment 5 of the present invention; and
FIG. 10 is a schematic structural diagram of still another microwave device according to Embodiment 5 of the present invention.

### DETAILED DESCRIPTION OF THE EMBODIMENTS

To make the objectives, technical solutions, and advantages of the present invention more clearer, the embodiments of the present invention are further described in detail in the following with reference to the accompanying drawings.

### Embodiment 1

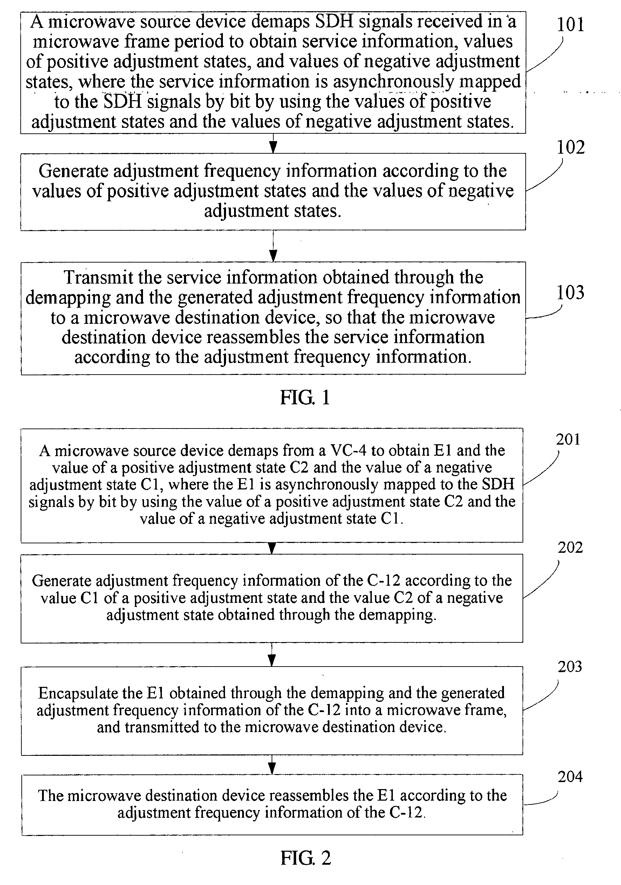

This embodiment provides a method for transmitting SDH signals through microwave. Referring to FIG. 1, the method specifically includes the following steps:
Step 101: A microwave source device demaps SDH signals received in a microwave frame period to obtain service information, values of positive adjustment states, and values of negative adjustment states, where the service information is asynchronously mapped to the SDH signals by bit by using the values of positive adjustment states and the values of negative adjustment states.
Step 102: Generate adjustment frequency information according to the values of positive adjustment states and the values of negative adjustment states.
Step 103: Transmit the service information obtained through the demapping and the generated adjustment frequency information to a microwave destination device, so that the microwave destination device reassembles the service information according to the adjustment frequency information.

According to the method provided by this embodiment, the microwave source device demaps the SDH signals, and after generating the adjustment frequency information according to the values of positive adjustment states and the values of negative adjustment states obtained through the demapping, transmits only the service information obtained through the demapping and the generated adjustment frequency information to the microwave destination device, so that the microwave destination device reassembles the service information according to the adjustment frequency information. In this way, not only a high utilization rate of microwave bandwidth may be ensured, but also the service information transmitted between any two microwave devices may be enabled to satisfy wander performance requirements, so that long-chain networking transmission may be implemented, thereby achieving long-distance transmission of the SDH signals in the microwave.

### Embodiment 2

This embodiment provides a method for transmitting SDH signals through microwave. To facilitate description, a following example is taken in this embodiment: Service information in the SDH signals transmitted through microwave is a data stream E1 of 2048 kbit/s, and a Synchronous Transfer Module (STM) having a frame structure of the SDH signals is demapped to low order path signals for transmission. For E1, G.823 (The control of jitter and wander within digital networks which are based on the 2048 kbit/s hierarchy) explicitly specifies requirements on jitter and wander of E1. In microwave transmission, because microwave may be used for rectilinear transmission only within a line-of-sight range, a transmission distance between two microwave stations cannot be too large, and a long chain needs to be formed for long-distance transmission. The wander of the E1 service greatly increases after long-chain transmission, and if it is intended to maintain good wander performance, additional transmission of time clock information is required, which occupies precious microwave bandwidth.

To ensure a high utilization rate of the microwave bandwidth and satisfy wander performance requirements for a data stream, according to the method provided by this embodiment, the service information and the time clock information is separated from each other and the service information and the time clock information are independently transmitted through different paths in the microwave frame, so that a microwave destination device reassembles the service information according to the received time clock information, so as to maintain original time clock information on each microwave device of the long-chain transmission. Referring to FIG. 2, the method provided by this embodiment specifically includes the following steps.

Step 201: A microwave source device demaps from a VC-4 to obtain E1, the value of a positive adjustment state C2 and the value of a negative adjustment state C1, where the E1 is asynchronously mapped to SDH signals by bit by using the value of a positive adjustment state C2 and the value of a negative adjustment state C1.

For this step, to enter an SDH frame, all service information in the SDH signals should be processed by performing the following three steps: mapping, aligning, and multiplexing. The mapping is a process for encapsulating the service information of various rates after rate justification into a corresponding standard container, and then adding Path Overhead (POH) to form a VC, in which a deviation of a frame phase is referred to as frame offset. The aligning is a process for incorporating frame offset into a TU or an Administrative Unit (AU). The multiplexing is a process for enabling a plurality of low order path layer signals to enter a high order path by performing rate justification or enabling a plurality of high order path layer signals to enter a multiplex layer by performing rate justification.

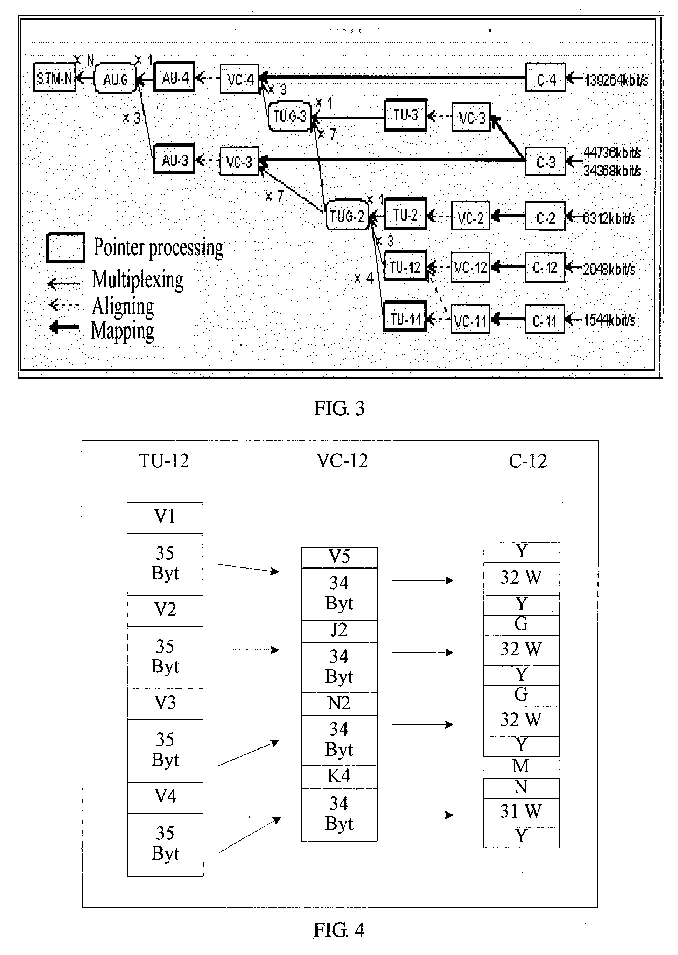

In a schematic structural diagram of SDH multiplexing and mapping as shown in FIG. 3, C represents a container, VC represents a virtual container, TU represents a tributary unit, TUG represents a tributary unit group, AU represents an administrative unit, AUG represent an administrative unit group, and subscripts of the multiplexing units represent signal levels corresponding to the multiplexing units. The E1 having a rate range of 2.046 Mbit/s to 2.050 Mbit/s may be loaded in a standard C-12 container. To monitor the performance of any 2 Mbit/s channel signal in real time during SDH network transmission, the C-12 container needs to be repacked, that is, added with corresponding POH (low order POH), so as to form an information structure of a VC-12. To enable the device receiving the signal to accurately align a frame of the VC-12, a 4-byte Tributary Pointer (TU-PTR) is added on 4 gaps of a VC-12 multi-frame, and at this time, the information structure of the signal becomes a TU-12.

A process for demapping an E1 payload from a TU-12 is provided in FIG. 4, in which V1, V2, V3, and V4 are low order pointers, V5, J2, N2, and K4 are low order overhead, Y=RRRRRRRR (a stuffing byte), G=C1C2OOOORR (C1 is a negative adjustment control bit, S1 is valid information when C1=0, and S1 is a stuffing byte when C1=1; and C2 is a positive adjustment control bit, S2 is valid information when C2=0, and S2 is a stuffing byte when C2=1), M=C1C2RRRRRS1, N=S2IIIIIII, W=IIIIIIII, R is a fixed insertion non-information bit, I is an information bit, and O is an overhead bit.

Step 202: Generate adjustment frequency information of the C-12 container according to the value of a positive adjustment state C2 and the value of a negative adjustment state C1 obtained through the demapping.

It may be seen from the schematic structural diagram of SDH multiplexing and mapping shown in FIG. 3 that, a VC-4 corresponds to 63 TU-12s, and each TU-12 has two adjustment information bits C1 and C2. When the adjustment frequency information of the C-12 container is generated according to the value of a positive adjustment state C2 and the value of a negative adjustment state C1 obtained through the demapping, the method provided by this embodiment is to accumulate the value of a positive adjustment state C2 and the value of a negative adjustment state C1 of all TU-12s to which the VC-4s correspond to in a frame period, and use the result of accumulation as the adjustment frequency information.

For example, the microwave source device receives M VC-4s in a frame period, and because each VC-4 corresponds to 63 TU-12s, the process of accumulating the value of a positive adjustment state C2 and the value of a negative adjustment state C1 of all TU-12s to which the VC-4s corresponding to in a frame period may specifically include: accumulating the values of C1 and C2 in a first TU-12 corresponding to each of the M VC-4s, and accumulating the values of C1 and C2 in a second TU-12 corresponding to each of the M VC-4s, and so on, until the values of C1 and C2 in the 63rd TU-12s corresponding to the M VC-4s are accumulated, so as to obtain 63 accumulation results, and using each accumulation result as the adjustment frequency information, so as to obtain 63 pieces of adjustment frequency information.

Specifically, an up/down counter may be adopted during accumulation. When positive adjustment occurs on the microwave source device once, 1 is added to the value of the up/down counter, and when positive adjustment occurs twice, 2 is added to the value, and so on; similarly, when negative adjustment occurs on the microwave source device once, 1 is subtracted from the value, and when negative adjustment occurs twice, 2 is subtracted from the value, and so on.

The adjustment frequency information may further include a parity check, so that when the adjustment frequency information is sent to the microwave destination device in subsequent steps, the microwave destination device may check received adjustment frequency information, so as to ensure correctness of the received adjustment frequency information, and reference can be made to subsequent steps for details.

An example that the number of bits of the adjustment frequency information is K (including check bits) and the number of frames of a VC-4 received by the microwave source device in a microwave frame period is M is taken, both M and K are integers greater than 0, and this embodiment is not intended to limit specific values of M and K. Because each frame of a VC-4 has 63 TU-12s, and each TU-12 has two adjustment information bits C1 and C2, if the method provided by the prior art is adopted, an air interface needs to deliver (M*63*2) bits, and if the method provided by this embodiment is adopted, the air interface needs to deliver (63*K) bits. In typical applications, the range of (M*2) is in an interval of 8-18 according to different microwave frame modulation modes, and practical application requirements can be satisfied by setting K to be 5. Therefore, the method provided by this embodiment can save the bandwidth in comparison with the prior art.

Step 203: Encapsulate the E1 obtained through the demapping and the generated adjustment frequency information of the C-12 container into a microwave frame, and transmitted to the microwave destination device.

Specifically, the E1 obtained through the demapping may be encapsulated into a microwave frame in an asynchronous bit mapping manner, and transmitted to the microwave destination device through an air interface. Furthermore, to ensure the wander performance of the E1, according to the method provided by this embodiment, the adjustment frequency information of the C-12 container needs to be added in the microwave frame, and the adjustment frequency information of the C-12 container and the E1 are transmitted to the microwave destination device at the same time by adopting different channels. In specific implementation, a specific position for encapsulating the E1 and the adjustment frequency information into the microwave frame may be determined by the microwave source device and the microwave destination device through negotiation in advance, for example, the microwave source device and the microwave destination device determine through negotiation in advance that a first byte in the microwave frame carries the E1 and a second byte in the microwave frame carries the adjustment frequency information, and in this case, after the microwave source device sends the microwave frame to the microwave destination device, the microwave destination device obtains the E1 and the adjustment frequency information according to first and second bytes after being demapped. In addition, other bytes may be selected to carry the E1 and the adjustment frequency information, and other manners may be selected to enable the microwave destination device to determine the specific position for encapsulating the E1 and the adjustment frequency information into the microwave frame, which is not specifically limited in this embodiment, as long as it is ensured that after receiving the microwave frame, the microwave destination device can demap the microwave frame to obtain the E1 and the adjustment frequency information.

It should be noted that, here, the adjustment frequency information is sent at a frequency of once per microwave frame period, and contains only C-12 bit mapping adjustment information and but does not contain other information of a TU-12, therefore the bandwidth occupancy is far less than the manner of directly transmitting the TU-12.

Step 204: The microwave destination device reassembles the E1 according to the adjustment frequency information of the C-12 container.

For this step, reserved adjustment frequency information is stored locally by the microwave destination device, and when the microwave destination device decapsulates the microwave frame to obtain the adjustment frequency information, the locally stored adjustment frequency information needs to be updated according to the received adjustment frequency information. Therefore, before the microwave destination device reassembles the service information according to the adjustment frequency information, the method further includes:
comparing the received adjustment frequency information with the locally stored adjustment frequency information;
positively adjusting the locally stored adjustment frequency information when it is determined through comparison that the received adjustment frequency information is greater than the locally stored adjustment frequency information;
negatively adjusting the locally stored adjustment frequency information when it is determined through comparison that the received adjustment frequency information is less than the locally stored adjustment frequency information; and
maintaining the locally stored adjustment frequency information when it is determined through comparison that the received adjustment frequency information is equal to the locally stored adjustment frequency information.

No matter of positive adjustment or negative adjustment, an adjustment amplitude is a difference value between the received adjustment frequency information and the locally stored adjustment frequency information. For example, if the received adjustment frequency information is 2, and the locally stored adjustment frequency information is 1, the locally stored adjustment frequency information is positively adjusted by an amplitude of 1; and if the received adjustment frequency information is 1, and the locally stored adjustment frequency information is 2, the locally stored adjustment frequency information is negatively adjusted by an amplitude of 1.

For the case that the received adjustment frequency information includes the parity check, the microwave destination device needs to perform parity check on the received adjustment frequency information, and after it is ensured that the received adjustment frequency information has no parity error, the comparison is performed, and the locally stored adjustment information is updated according to the comparison result. If a parity error occurs, the received adjustment frequency information is ignored. According to the adjustment frequency information of the C-12 container (the difference), the E1 obtained through the demapping from the microwave frame is mapped into the C-12 container according to the adjustment frequency which is the same as the adjustment frequency when the microwave source device sends the microwave frame, and is encapsulated into a VC-4 after multiple levels of multiplexing.

Furthermore, when the microwave destination device reassembles the E1 according to the adjustment frequency information of the C-12 container, if a System Time Clock (STC) of the microwave source device is synchronous with an STC of the microwave destination device, the generated TU-12 pointer does not need to be adjusted. When the STC of the microwave source device is asynchronous with the STC of the microwave destination device, the microwave destination device needs to perform pointer adjustment according to a First In First Out (FIFO) watermark to absorb the time clock difference, that is, the pointer adjustment is performed according to a buffer state of the E1, and the specific process is as follows.

If the buffer state (that is, the FIFO watermark) of the E1 is higher than an upper threshold, the pointer is negatively adjusted.

If the buffer state (that is, the FIFO watermark) of the E1 is lower than a lower threshold, the pointer is positively adjusted.

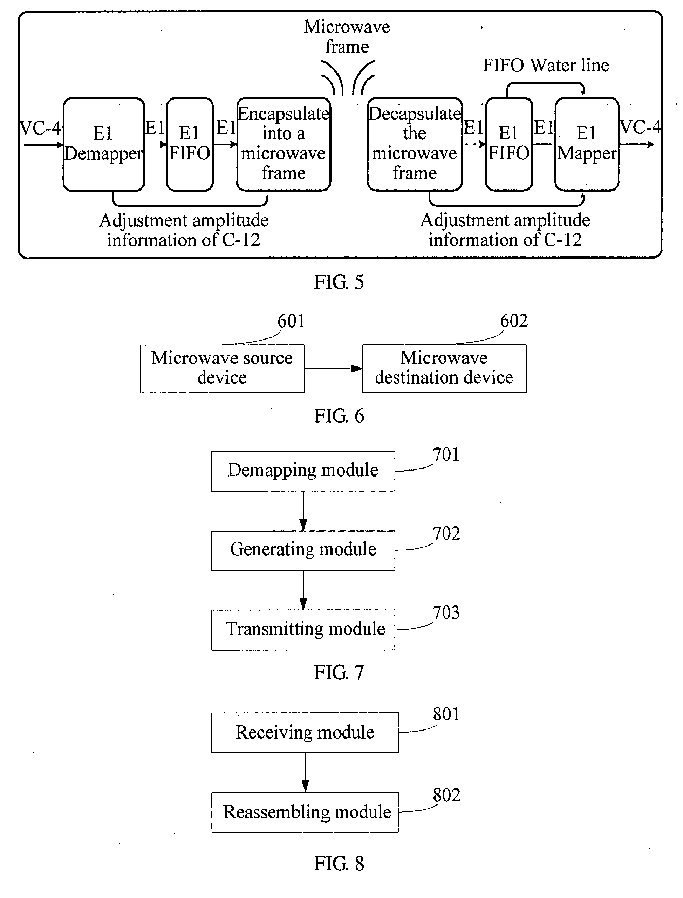

This embodiment is not intended to specifically limit the upper threshold and the lower threshold. Through steps 201 to 204, after the microwave destination device obtains the VC-4 by encapsulation, the transmission of the SDH signals from the microwave source device to the microwave destination device is completed, and the principle may be as shown in FIG. 5.

According to the method provided by this embodiment, the microwave source device demaps the SDH signals, and after generating the adjustment frequency information according to the values of positive adjustment states and the values of negative adjustment states obtained through the demapping, transmits only the service information obtained through the demapping and the generated adjustment frequency information to the microwave destination device, so that the microwave destination device maps the received service information into a C-12 container according to the adjustment frequency which is the same as the adjustment frequency when the microwave source device sends the microwave frame, and encapsulates the service information into a VC-4 after multiplexing level by level, thereby reassembling the service information according to the adjustment frequency information. In this way, not only a high utilization rate of microwave bandwidth can be ensured, but also the service information transmitted between any two microwave devices can be enabled to satisfy wander performance requirements, so that long-chain networking transmission can be implemented, thereby achieving long-distance transmission of the SDH signals in the microwave.

### Embodiment 3

This embodiment provides a system for transmitting SDH signals through microwave. Referring to FIG. 6, the system includes a microwave source device 601 and a microwave destination device 602.

The microwave source device 601 is configured to demap SDH signals received in a microwave frame period to obtain service information, values of positive adjustment states, and values of negative adjustment states, where the service information is asynchronously mapped to the SDH signals by bit by using the values of positive adjustment states and the values of negative adjustment states, generate adjustment frequency information according to the values of positive adjustment states and the values of negative adjustment states, and encapsulate the service information obtained through the demapping and the generated adjustment frequency information into a microwave frame and send the microwave frame.

The microwave destination device 602 is configured to receive the microwave frame that contains the service information and the adjustment frequency information and is sent by the microwave source device 601, and reassemble the service information according to the adjustment frequency information.

When the microwave source device 601 generates the adjustment frequency information according to the values of positive adjustment states and the values of negative adjustment states, the microwave source device 601 is specifically configured to accumulate all the values of positive adjustment states and the values of negative adjustment states obtained through the demapping in a microwave frame period to obtain the adjustment frequency information.

Before the microwave destination device 602 reassembles the service information according to the adjustment frequency information, the microwave destination device 602 is further configured to compare received adjustment frequency information with locally stored adjustment frequency information, positively adjust the locally stored adjustment frequency information when it is determined through comparison that the received adjustment frequency information is greater than the locally stored adjustment frequency information, negatively adjust the locally stored adjustment frequency information when it is determined through comparison that the received adjustment frequency information is less than the locally stored adjustment frequency information, and maintain the locally stored adjustment frequency information when it is determined through comparison that the received adjustment frequency information is equal to the locally stored adjustment frequency information.

When the microwave destination device 602 reassembles the service information according to the adjustment frequency information, the microwave destination device 602 is further configured to, when a time clock of the microwave source device 601 is asynchronous with a time clock of the microwave destination device 602, negatively adjust a pointer if a buffer state of the service information is higher than an upper threshold, and positively adjust the pointer if the buffer state of the service information is lower than a lower threshold.

According to the system for transmitting SDH signals through microwave provided by this embodiment, the microwave source device demaps the SDH signals, and after generating the adjustment frequency information according to the values of positive adjustment states and the values of negative adjustment states obtained through the demapping, transmits only the service information obtained through the demapping and the generated adjustment frequency information to the microwave destination device, so that the microwave destination device reassembles the service information according to the adjustment frequency information. In this way, not only a high utilization rate of microwave bandwidth can be ensured, but also wander performance requirements for the service information can be satisfied, so that long-chain networking transmission can be implemented, thereby achieving long-distance transmission of the SDH signals in the microwave.

### Embodiment 4

This embodiment provides a microwave device. Referring to FIG. 7, the microwave device includes:
a demapping module 701, configured to demap SDH signals received in a microwave frame period to obtain service information, values of positive adjustment states, and values of negative adjustment states, where the service information is asynchronously mapped to the SDH signals by bit by using the values of positive adjustment states and the values of negative adjustment states;
a generating module 702, configured to generate adjustment frequency information according to the values of positive adjustment states and the values of negative adjustment states obtained through the demapping performed by the demapping module 701; and
a transmitting module 703, configured to transmit the service information obtained through the demapping performed by the demapping module 701 and the adjustment frequency information generated by the generating module 702 to a microwave destination device, so that the microwave destination device reassembles the service information according to the adjustment frequency information.

The generating module 702 is specifically configured to accumulate all the values of positive adjustment states and the values of negative adjustment states obtained through the demapping performed by the demapping module 701 in a microwave frame period to obtain the adjustment frequency information.

The microwave device of this embodiment demaps the SDH signals, and after generating the adjustment frequency information according to the values of positive adjustment states and the values of negative adjustment states obtained through the demapping, transmits only the service information obtained through the demapping and the generated adjustment frequency information to the microwave destination device, so that the microwave destination device reassembles the service information according to the adjustment frequency information. In this way, not only a high utilization rate of microwave bandwidth can be ensured, but also wander performance requirements for the service information can be satisfied, so that long-chain networking transmission can be implemented, thereby achieving long-distance transmission of the SDH signals in the microwave.

### Embodiment 5

This embodiment provides a microwave device. Referring to FIG. 8, the microwave device includes:
a receiving module 801, configured to receive service information and adjustment frequency information that are sent by a microwave source device; and
a reassembling module 802, configured to reassemble, according to the adjustment frequency information received by the receiving module 801, the service information received by the receiving module 801.

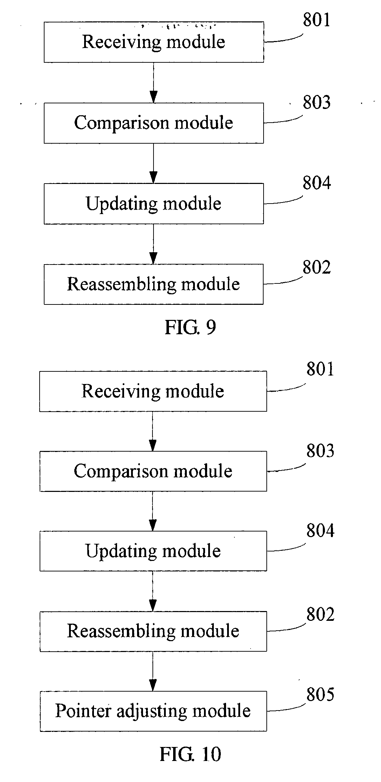

Referring to FIG. 9, the microwave device further includes:
a comparison module 803, configured to compare the adjustment frequency information received by the receiving module 801 with locally stored adjustment frequency information.
an updating module 804, configured to positively adjust the locally stored adjustment frequency information when the comparison module 803 determines that the adjustment frequency information received by the receiving module 801 is greater than the locally stored adjustment frequency information, negatively adjust the locally stored adjustment frequency information when the comparison module 803 determines that the adjustment frequency information received by the receiving module 801 is less than the locally stored adjustment frequency information, and maintain the locally stored adjustment frequency information when the comparison module 803 determines that the adjustment frequency information received by the receiving module 801 is equal to the locally stored adjustment frequency information.

Referring to FIG. 10, the microwave device further includes:
a pointer adjusting module 805, configured to, when a time clock of the microwave source device is asynchronous with a time clock of the microwave destination device, negatively adjust a pointer if a buffer state of the service information is higher than an upper threshold, and positively adjust the pointer if the buffer state of the service information is lower than a lower threshold.

The microwave device provided by this embodiment receives the service information and the adjustment frequency information that are sent by the microwave source device, and reassembles the service information according to the adjustment frequency information, so that not only a high utilization rate of microwave bandwidth can be ensured, but also wander performance requirements for the service information can be satisfied. In this way, long-chain networking transmission can be implemented, thereby achieving long-distance transmission of the SDH signals in the microwave.

It should be noted that, when the microwave device provided by the foregoing embodiments transmits the SDH signals and reassembles the service information, the division of the foregoing functional modules is only taken as an example for description; in practical applications, the foregoing functions may be implemented by different functional modules to complete as required, that is, the internal structure of the device is divided into different functional modules, so as to implement all or a part of the foregoing described functions. Furthermore, the system for transmitting SDH signals through microwave and the microwave device provided by the foregoing embodiments have the same idea as the embodiments of the method for transmitting SDH signals through microwave, and for the specific implementation process, reference can be made to the method embodiments, so that the details are not described herein again.

The sequence numbers of the foregoing embodiments of the present invention are merely for the convenience of description, and do not imply the preference among the embodiments.

A part of the steps of the method according to the embodiments of the present invention may be implemented by software, and the corresponding software program may be stored in a readable storage medium, for example, an optical disk or a hard disk.

The foregoing descriptions are merely exemplary embodiments of the present invention, but not intended to limit the present invention.

## Claims

1. A method for transmitting Synchronous Digital Hierarchy, SDH, signals through microwave, comprising:
demapping (101, 201), by a microwave source device, SDH signals received in a microwave frame period to obtain service information, values of positive adjustment states, and values of negative adjustment states, wherein the service information is asynchronously mapped to the SDH signals by bit by using the values of positive adjustment states and the values of negative adjustment states;
**characterized in that** the method further comprises:
accumulating (102, 202) all the values of positive adjustment states and the values of negative adjustment states obtained through the demapping in the microwave frame period to obtain adjustment frequency information; and
transmitting (103, 203) the service information obtained through the demapping and the generated adjustment frequency information to a microwave destination device, so that the microwave destination device reassembles the service information according to the adjustment frequency information.

2. The method according to claim 1, wherein when the microwave destination device reassembles the service information according to the adjustment frequency information, the method further comprises:
when a time clock of the microwave source device is asynchronous with a time clock of the microwave destination device, negatively adjusting a pointer if a buffer state of the service information is higher than an upper threshold; and positively adjusting the pointer if the buffer state of the service information is lower than a lower threshold.

3. A microwave device, comprising:
a demapping module (701), configured to demap Synchronous Digital Hierarchy, SDH, signals received in a microwave frame period to obtain service information, values of positive adjustment states, and values of negative adjustment states, wherein the service information is asynchronously mapped to the SDH signals by bit by using the values of positive adjustment states and the values of negative adjustment states;
**characterized in that** the microwave device further comprises:
a generating module (702), configured to accumulate all the values of positive adjustment states and the values of negative adjustment states obtained through the demapping performed by the demapping module in a microwave frame period to obtain adjustment frequency information; and
a transmitting module (703), configured to transmit the service information obtained through the demapping performed by the demapping module and the adjustment frequency information generated by the generating module to a microwave destination device, so that the microwave destination device reassembles the service information according to the adjustment frequency information.

4. A system for transmitting Synchronous Digital Hierarchy, SDH, signals through microwave, comprising: a microwave source device (601) according to claim 3 and a microwave destination device, wherein the microwave destination device comprises:
a receiving module (801), configured to receive service information and adjustment frequency information that are sent by a microwave source device; and
a reassembling module (802), configured to reassemble, according to the adjustment frequency information received by the receiving module, the service information received by the receiving module.

## Patentansprüche

1. Verfahren zum Übertragen von Synchrondigitalhierarchie-Signalen, SDH-Signalen, über Mikrowelle, das Folgendes umfasst:
Rückabbilden (101, 201) von SDH-Signalen, die in einer Mikrowellenrahmenzeitspanne empfangen werden, durch eine Mikrowellenquellenvorrichtung, um Dienstinformationen, Werte von positiven Einstellungszuständen und Werte von negativen Einstellungszuständen zu erhalten,
wobei die Dienstinformationen bitweise asynchron auf die SDH-Signale durch Verwenden der Werte von positiven Einstellungszuständen und der Werte von negativen Einstellungszuständen abgebildet sind;
**dadurch gekennzeichnet, dass** das Verfahren ferner Folgendes umfasst:
Akkumulieren (102, 202) aller Werte von positiven Einstellungszuständen und Werte von negativen Einstellungszuständen, die durch das Rückabbilden erhalten werden, in der Mikrowellenrahmenzeitspanne, um Einstellungsfrequenzinformationen zu erhalten; und
Übertragen (103, 203) der durch das Rückabbilden erhaltenen Dienstinformationen, und der erzeugten Einstellungsfrequenzinformationen zu einer Mikrowellenzielvorrichtung, so dass die Mikrowellenzielvorrichtung die Dienstinformationen gemäß den Einstellungsfrequenzinformationen erneut zusammenstellt.

2. Verfahren nach Anspruch 1, wobei das Verfahren dann, wenn die Mikrowellenzielvorrichtung die Dienstinformationen gemäß den Einstellungsfrequenzinformationen erneut zusammenstellt, ferner Folgendes umfasst:
wenn ein Zeittakt der Mikrowellenquellenvorrichtung mit einem Zeittakt der Mikrowellenzielvorrichtung asynchron ist, negatives Einstellen eines Zeigers, wenn ein Pufferzustand der Dienstinformationen höher ist als ein oberer Schwellenwert;
und positives Einstellen des Zeigers, wenn der Pufferzustand der Dienstinformationen niedriger ist als ein unterer Schwellenwert.

3. Mikrowellenvorrichtung, die Folgendes umfasst:
ein Rückabbildungsmodul (701), das konfiguriert ist, Synchrondigitalhierarchie-Signale, SDH-Signale, die in einer Mikrowellenrahmenzeitspanne empfangen werden, rückabzubilden, um Dienstinformationen, Werte von positiven Einstellungszuständen und Werte von negativen Einstellungszuständen zu erhalten, wobei die Dienstinformationen bitweise asynchron auf die SDH-Signale durch Verwenden der Werte von positiven Einstellungszuständen und der Werte von negativen Einstellungszuständen abgebildet sind;
**dadurch gekennzeichnet, dass** die Mikrowellenvorrichtung ferner Folgendes umfasst:
ein Erzeugungsmodul (702), das konfiguriert ist, alle Werte von positiven Einstellungszuständen und Werte von negativen Einstellungszuständen, die durch das Rückabbilden, das von das Rückabbildungsmodul ausgeführt wird, in einer Mikrowellenrahmenzeitspanne erhalten werden, zu akkumulieren, um Einstellungsfrequenzinformationen zu erhalten; und
ein Übertragungsmodul (703), das konfiguriert ist, die Dienstinformationen, die durch das Rückabbilden, das von dem Rückabbildungsmodul ausgeführt wird, erhalten werden, und die Einstellungsfrequenzinformationen, die von dem Erzeugungsmodul erzeugt werden, zu einer Mikrowellenzielvorrichtung zu übertragen, so dass die Mikrowellenzielvorrichtung die Dienstinformationen gemäß den Einstellungsfrequenzinformationen erneut zusammenstellt.

4. System zum Übertragen von Synchrondigitalhierarchie-Signalen, SDH-Signalen, über Mikrowelle, das Folgendes umfasst: eine Mikrowellenquellenvorrichtung (601) nach Anspruch 3 und eine Mikrowellenzielvorrichtung, wobei die Mikrowellenzielvorrichtung Folgendes umfasst:
ein Empfangsmodul (801), das konfiguriert ist, Dienstinformationen und Einstellungsfrequenzinformationen, die von einer Mikrowellenquellenvorrichtung gesendet werden, zu empfangen; und
ein Modul (802) zum erneuten Zusammenstellen, das konfiguriert ist, die Dienstinformationen, die von dem Empfangsmodul empfangen werden, gemäß den Einstellungsfrequenzinformationen, die von dem Empfangsmodul empfangen werden, erneut zusammenzustellen.

## Revendications

1. Procédé de transmission de signaux de Hiérarchie Numérique Synchrone, SDH, (Synchronous Digital Hierarchy), par microondes, comprenant :
le démappage (101, 201), par un dispositif source de microondes, de signaux SDH reçus pendant une période de trame de microondes afin d'obtenir des informations de service, des valeurs d'états d'ajustement positifs, et des valeurs d'états d'ajustement négatifs, les informations de service étant mappées de manière asynchrone sur les signaux SDH par bit par utilisation des valeurs d'états d'ajustement positifs et des valeurs d'états d'ajustement négatifs ;
**caractérisé en ce que** le procédé comprend en outre :
l'accumulation (102, 202) de toutes les valeurs d'états d'ajustements positifs et des valeurs d'états d'ajustement négatifs obtenues au moyen du démappage pendant la période de trame de microondes afin d'obtenir des informations de fréquence d'ajustement ; et
la transmission (103, 203) des informations de service obtenues au moyen du démappage et des informations de fréquence d'ajustement générées à un dispositif destinataire de microondes, de manière à ce que le dispositif destinataire de microondes reconstitue les informations de service conformément aux informations de fréquence d'ajustement.

2. Procédé selon la revendication 1, dans lequel, lorsque le dispositif destinataire de microondes reconstitue les informations de service conformément aux informations de fréquence d'ajustement, le procédé comprend en outre :
lorsqu'une horloge du dispositif source de microondes est asynchrone par rapport à une horloge du dispositif destinataire de microondes, l'ajustement de manière négative d'un pointeur si un état de tampon des informations de service est supérieur à un seuil supérieur ; et l'ajustement de manière positive du pointeur si l'état de tampon des informations de service est inférieur à un seuil inférieur.

3. Dispositif à microondes, comprenant :
un module de démappage (701), configuré pour démapper des signaux de Hiérarchie Numérique Synchrone, SDH, reçus pendant une période de trame de microondes afin d'obtenir des informations de service, des valeurs d'états d'ajustement positifs et des valeurs d'états d'ajustement négatifs, les informations de service étant mappées de manière asynchrone sur les signaux SDH par bit en utilisant les valeurs d'états d'ajustement positifs et les valeurs d'états d'ajustement négatifs ;
**caractérisé en ce que** le dispositif à microondes comprend en outre :
un module générateur (702), configuré pour accumuler toutes les valeurs d'états d'ajustements positifs et les valeurs d'états d'ajustement négatifs obtenues par l'intermédiaire du démappage effectué par le module de démappage pendant une période de trame de microondes afin d'obtenir des informations de fréquence d'ajustement ; et
un module de transmission (703), configuré pour transmettre les informations de service obtenues par l'intermédiaire du démappage effectué par le module de démappage et les informations de fréquence d'ajustement générées par le module générateur à un dispositif destinataire de microondes, de manière à ce que le dispositif destinataire de microondes reconstitue les informations de service conformément aux informations de fréquence d'ajustement.

4. Système de transmission de signaux de Hiérarchie Numérique Synchrone, SDH (Synchronous Digital Hierarchy), par l'intermédiaire de microondes, comprenant : un dispositif source de microondes (601) selon la revendication 3, et un dispositif destinataire de microondes, le dispositif destinataire de microondes comprenant :
un module de réception (801), configuré pour recevoir des informations de service et des informations de fréquence d'ajustement qui sont envoyées par un dispositif source de microondes ; et
un module de reconstitution (802), configuré pour reconstituer, conformément aux informations de fréquence d'ajustement reçues par le module de réception, les informations de service reçues par le module de réception.
